# EUROPEAN PATENT SPECIFICATION

(11) **EP 2 112 881 B1**
(45) Date of publication and mention of the grant of the patent: **22.09.2010**
(21) Application number: 08707541.2
(22) Date of filing: 05.02.2008
(51) Int. Cl.: A01N 43/88, A01N 37/18, A01N 39/02, A01N 43/54, A01N 43/56, A01N 47/36, A01N 47/38, A01P 13/00

(54) **HERBICIDAL COMPOSITIONS COMPRISING DIFLUOROMETHANESULFONYLANILIDE AND ONE OR MORE HERBICIDES**
HERBIZIDE ZUSAMMENSETZUNG MIT DIFLUORMETHANSULFONYLANILID UND EINEM ODER MEHREREN HERBIZIDEN
COMPOSITIONS HERBICIDES COMPRENANT DE LA DIFLUOROMETHANE SULFONYLANILIDE ET AU MOINS UN HERBICIDE

(30) Priority: 19.02.2007 JP 2007037531
(43) Date of publication of application: 04.11.2009
(73) Proprietor: Bayer CropScience AG, 40789 Monheim (DE)
(72) Inventor: ENDO, Keiji, Ibaraki 300-0331 (JP); SHIRAKURA, Shinichi, Tochigi 323-0807 (JP); NAKAMURA, Shin, Tochigi 323-0807 (JP)
(86) International application number: PCT/EP2008/000870
(87) International publication number: WO 2008/101595

(56) References cited:
- WO-A-2005/096818
- WO-A-2006/008159
- WO-A-2007/031208
- WO-A-2007/079965
- JP-A- 2002 145 705
- JP-A- 2004 292 417
- JP-A- 2005 306 813

## Description

The present invention relates to mixed herbicide compositions for controlling weeds, preferably for controlling weeds in crops of useful plants, for example cereal crops such as rice, wheat, barley, rye, oat, maize, millet and plantation crops, preferably paddy field crops, such as in fields for paddy rice. More particularly, the present invention relates to mixed herbicide compositions for paddy field comprising herbicidal difluoromethane sulfonanilide and known herbicidal compounds as active ingredients.

### Background Art

Certain difluoromethane sulfonanilides are known to exhibit a good weed controlling effect on lowland weeds (WO 2005/096818, Japanese Patent Application Laying-open No. 2006-56870). However, contrary to our expectation, when using them actually, they may sometimes exhibit an insufficient herbicidal effect and pytotoxicity is also observed for paddy rice. For the actual application, it is actually difficult to provide a single active compound having the property to respond to different uses due to existence of many undertones affecting their herbicidal effects. Particularly, the effects of active compounds are different depending on the type of the weeds to be controlled, the conditions of areas of weed emerging and the like. Further, the development of agents exhibiting useful effects in lower dose is strongly required in consideration of cost saving in agriculture production and environmental consequences.

To satisfy such requirements, herbicides are often used with other active compounds mixed to improve the properties of the herbicides.

Patent applications JP 2005 306813 A, JP 2004 292417 A, JP 2002 145705 A, for example, disclose herbicidal mixtures of certain difluoromethane sulfoanilides and certain herbicides, said mixtures having low phytotoxicity on rice while being effective on various kinds of paddy field weeds.

However, even use of such mixed agents may often fail to exert favorable effects because of, for example, degradation of the active compounds, antagonism of their effects and the like.

### Summary of the Invention

Now, the inventors have found that the compositions below exhibit very good and desirable effects in terms of weed control and, particularly, phytotoxicity of crops of useful plants such as of rice in paddy field.

The present invention provides mixed herbicide compositions, preferably for paddy field, characterized by comprising, as active ingredients,
(a) difluoromethane sulfonanilide represented by the formula: 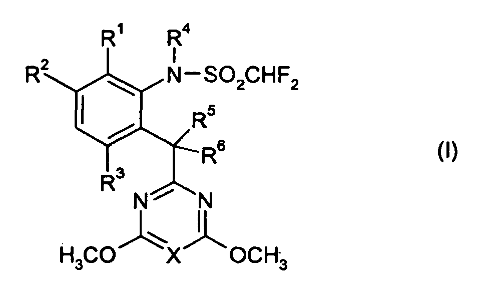 wherein
   R¹ represents a fluorine atom or a chlorine atom, R² represents hydrogen, a fluorine atom or a chlorine atom, R³ represents hydrogen or a fluorine atom, R⁴ represents methyl, R⁵ represents hydrogen, R⁶ represents hydroxyl, a fluorine atom or a chlorine atom, or R⁵ and R⁶ may be taken together with the carbon atom to which they are attached to form C=O, and X represents CH or N, and
(b) one or more herbicidal compounds selected from the group consisting of pretilachlor, butachlor, alachlor, metolachlor, acetochlor, clomeprop, bromobutide, benfuresate, indanofan, pyrazolate, benzofenap, pyrazoxyfen, pyradonil, oxaziclomefone, bensulfuron-methyl, azimsulfuron, imazosulfuron, pyrazosulfuron-ethyl, cyclosulfamuron, ethoxysulfuron, halosulfuron-methyl, orthosulfamuron, cinosulfuron, metosulfuron-methyl, flucetosulfuron, TH547 (Code No.), NC620 (Code No.), penoxsulam, thiobencarb, pyributicarb, molinate, dimethametryn, simetryn, cafenstrole, quindorac, anilofos, mefenacet, fentrazamide, pentoxazone, oxadiargyl, oxadiazon, benzobicydon, mesotrione, AVH301(Code No.), cyhalofop-butyl, metamifop, bispyribac-sodium salt, pyriftalid, pyrimisulfan, pyriminobac-methyl, chlomethoxynil, oxyfluorfen, dithiopyr, MCPA, MCPB, 2,4-D, daimuron, cumyluron, quinoclamine and clomazone; and, optionally,
(c) one or more compounds selected from the group consisting of dymron (daimuron), isoxadifen(-ethyl), flurazole, fenchlorazole-ethyl, fenclorim, cloquintocet-mexyl, oxabetrinil, fluxofenim, mefenpyr-diethyl, furilazole, R-29148 (Code No.), benoxacor, dichlormid and dicydonon as a safener.

According to the above composition of the invention, surprisingly, the compositions exhibit substantially higher weed controlling effect (synergetic effect) than the sum of the effects derived from the single uses of each compound contained in the composition, resulting in allowing the used concentration of each drug to be substantially reduced. Also, the optimum time of weed controlling treatment may be extended for a long time, and, for example, in wet rice culture, good weed controlling effect may be obtained in any stages at onset of weed emergence shortly after implantation and over the growing period and thus their potency may be prolonged for a long time, resulting in the efficient compositions having good residual efficacy and no damages against paddy rice obtained.

In the composition of the invention, preferred specific examples of the compound (a) of the formula (I) include those shown in Table A below.

**Table A**

| Compound No. | R¹ | R² | R³ | R⁴ | R⁵ | R⁶ | X |
|---|---|---|---|---|---|---|---|
| 1 | F | H | H | CH₃ | C=O | | N |
| 2 | Cl | H | H | CH₃ | C=O | | N |
| 3 | F | F | H | H* | H | OH | CH |
| 4 | F | Cl | H | H* | H | OH | CH |
| 5 | F | H | F | H* | H | OH | CH |
| 6 | F | F | H | H* | H | OH | N |
| 7 | F | H | H | CH₃ | H | OH | N |
| 8 | F | H | H | H* | H | F | CH |
| 9 | Cl | H | H | H* | H | F | CH |
| 10 | F | F | H | H* | H | F | CH |
| 11 | F | H | H | H* | H | Cl | CH |
| 12 | Cl | H | H | H* | H | Cl | CH |
| 13 | F | F | H | H* | H | Cl | CH |
| 14 | Cl | H | H | CH₃ | H | OH | N |

| | | | | | | | |
|---|---|---|---|---|---|---|---|
| * comparative compounds | | | | | | | |

These compounds can be used each independently or in combination with two or more of the compounds.

At the same time, in the composition of the invention, the herbicidal compound (b) is as above described, and among others, preferred examples may include (b-1) clomeprop, (b-2) bromobutide, (b-3) benzofenap, (b-4) bensulfuron methyl, (b-5) ethoxysulfuron, (b-6) fentrazamide, (b-7) AVH301, (b-8) pyrimisulfan.

Above mentioned herbicidal compounds (b) can be used each independently or in combination with two or more of the compounds (b) to make the mixed composition with the compound (a) of the formula (I).

The compound (c) as a safener to use in combination with the compound (a) of the formula (I) (and compound (b)) according to the invention is as above described, and among others, preferred examples may include (c-1) dymron, (c-2) mefenpyr-diethyl and (c-3) isoxadifen(-ethyl).

Above mentioned compounds (c) as a safener can be used each independently or in combination of two or more of the compounds (c) to make the mixed composition with the compound (a) of the formula (I) (and compound (b)).

Above mentioned herbicidal compounds (b) and above mentioned compounds (c) as a safener are described in, for example, "The Pesticide Manual 13th Ed. (British Crop Protection Council, 2003)".

The compound having the code number AVH 301 is a herbicide having the chemical name 2-{2-chloro-4-mesyl-3-[(tetrahydrofuran-2-ylmethoxy)-methyl]-benzoyl}-cyclohexan-1,3-dione, also known under the common name "tefuryltrione".

In the composition of the invention, the mixture ratio of the compound (a) of the formula (I) and the herbicidal compound (b) may vary over a relatively wide range depending on the type of the composition, the application term, the applied area, the application method and the like, and in general, at least one herbicidal compounds (b) may be used in the range of 0.01 to 200 parts by weight, preferably 0.05 to 100 parts by weight per one part by weight of the compound (a) of the formula (I). Specifically, the preferred examples of mixture ratio of the herbicidal compound (b) per one part by weight of the compound (a) of the formula (I) may include the following ratio:
clomeprop (b-1): 0.5 to 50 parts by weight, preferably 1 to 15 parts by weight;
bromobutide(b-2): 2 to 100 parts by weight, preferably 5 to 20 parts by weight;
benzofenap (b-3): 1 to 100 parts by weight, preferably 5 to 20 parts by weight;
bensulfuron methyl (b-4): 0.1 to 10 parts by weight, preferably 0.2 to 2 parts by weight;
ethoxysulfuron (b-5): 0.05 to 10 parts by weight, preferably 0.1 to 5 parts by weight;
fentrazamide (b-6): 0.5 to 50 parts by weight, preferably 1 to 10 parts by weight;
AVH301 (b-7): 0.5 to 50 parts by weight, preferably 1 to 10 parts by weight;
pyrimisulfan (b-8): 0.1 to 10 parts by weight, preferably 0.2 to 20 parts by weight.

The mixture ratio of the compound (a) of the formula (I) and the compound (c) as a safener may vary over a relatively wide range depending on the type of the composition, the application term, the applied area, the application method and the like, and in general, at least one compound (c) as a safener may be used in the range of 0.05 to 200 parts by weight, preferably 0.1 to 100 parts by weight per one part by weight of the compound (a) of the formula (I). Specifically, the preferred examples of mixture ratio of the compound (c) as a safener per one part by weight of the compound (a) of the formula (I) may include the following ratio:
Dymron (c-1): 1 to 100 parts by weight, preferably 2 to 50 parts by weight;
mefenpyr-diethyl (c-2): 0.1 to 20 parts by weight, preferably 0.5 to 10 parts by weight;
isoxadifen(-ethyl) (c-3): 0.05 to 10 parts by weight, preferably 0.5 to 5 parts by weight.

The composition of the invention exhibits a potent weed controlling effect against weeds, particularly lowland weeds. Thus the composition can be used as a mixed herbicide composition for controlling weeds, especially for selectively controlling weeds in crops of useful plants such as cereal crops or plantation crops, more preferably for controlling weeds in rice crops, including rice in paddy field, particularly a selective herbicide for paddy rice.

The invention thus relates to the use of the compositions according to the invention for weed control. The invention also relates to a method for controlling weeds which comprises applying the components (a) and (b) and optionally (c), simultaneously or sequentially, to the plants, part of the weed plants or the area where they are growing.

The composition of the invention can be used against various weeds, preferably weeds emerging in paddy field. The example of weeds may include those described below:
Dicotyledon weeds of the genera: *Polygonum, Rorippa, Rotala, Lindemia, Bidens, Dopatrium, Eclipta, Elatine, Gratiola, Lindemia, Ludwigia, Oenanthe, Ranunculus, Deinostema* and the like.
Monocotyledon weeds of the genera: *Echinochloa, Panicum, Poa, Cyperus, Monochoria, Fimbristylis, Sagittaria, Eleocharis, Scirpus, Alisma, Aneilema, Blyxa, Eriocaulon, Potamogeton* and the like.

Specifically the compositions of the invention may be used, for example, against the following representative lowland weeds.

### Plant name in Latin

Dicotyledons plants:
*Rotala indica Koehne*
*Lindemia procumbens Philcox*
*Ludwigia prostrate Roxburgh*
*Potamogeton distinctus A. Benn*
*Elatine triandra Schk*
*Oenanthe javanica*

Monocotyls plants:
*Echinochloa oryzicola Vasing*
*Monochoria vaginalis Presl.*
*Eleocharis acicularis L.*
*Eleocharis Kuroguwai Ohwi*
*Cyperus difformis L.*
*Cyperus serotinus Rottboel*
*Sagittaria pygmaea Miq.*
*Alisma canaliculatum A.Br.et Bouche*
*Scirpus juncoides Roxburgh*

However, use of the composition of the invention is not intended to be limited to uses against theses weeds, and can be used against other weeds as well.

The composition of the invention may be formulated into general preparation forms in uses for control of lowland weeds. The examples of the formulations may include, for example, solution, emulsion, wettable powder, suspension, powder, soluble powder, granule, suspended dense emulsion, solid (jumbo), floating granule, microcapsule in polymeric materials and the like.

These formulations may be prepared according to methods known per se. For example, the formulation according to the invention may be prepared by mixing the compound (a) of the formula (I) and the herbicidal compounds (b) and/or compounds (c) together with spreading agents such as liquid diluents and/or solid diluents, and, if desired, surfactants such as emulsifiers and/or dispersants and/or foam forming agents.

When water is used as a spreading agent, organic solvents, for example, may be used as an auxiliary solvent. Liquid diluents may include, for example, organic solvents such as aromatic hydrocarbons (e.g. xylene, toluene, alkylnaphthalene etc.), chlorinated aromatic or chlorinated aliphatic hydrocarbons (e.g. chlorobenzens, ethylene chlorides, methylene chlorides etc.), aliphatic hydrocarbons (e.g. cyclohexanes or paraffins (e.g. mineral oil fractions, mineral and vegetable oils)), alcohols (e.g. butanol, glycol and ethers or esters thereof etc.), ketones (e.g. acetone, methylethylketone, methylisobutylketone, cyclohexanone etc.), strong polar solvents (e.g. dimethylformamide, dimethylsulfoxide etc.) and water.

Solid diluents may include, for example, ammonium salts, crushed natural minerals (e.g. kaolin, day, talc, chalk, quartz, attapulgite, montmorillonite, diatomaceous earth etc.), crushed synthetic minerals (e.g. highly-dispersive silic acid, alumina, silicate etc.). Solid carriers which can be used for powders may include, for example, crushed and fractionated rocks (e.g. calcite, marble, pumice stone, sepiolite, dolomite etc.), synthetic granules of inorganic or organic powders, fine particles of organic materials (e.g. sawdust, coconut shells, corncob, stalk of Indian weed etc.).

Emulsifiers and/or foams may include nonionic or anionic emulsifiers (e.g. polyoxyethylene fatty acid esters, polyoxyethylene fatty alcohol ethers (e.g. alkylarylpolyglycol ethers, alkyl sulfonates, alkyl sulfates, aryl sulfonates etc.)), albumin hydrolyzed products and the like.

Suitable dispersants include, for example, lignin sulfite waste liquor, methylcellulose and the like.

Adhesive agents may be used for the formulations (powder, granule, emulsion), such as carboxymethylcellulose, natural or synthetic polymers (e.g. acacia, polyvinyl alcohols, polyvinyl acetates etc.), natural phosphatides (e.g. cephalins or lecithins), synthetic phosphatides and the like. Further, mineral oils or vegetable oils may be also used as additives.

Colorants may be used, such as inorganic pigments (e.g. ferric oxide, titanic oxide, Prussian blue etc.), organic pigments (e.g. alizarin dyes, azo dyes or metallophthalocyanine dyes etc.) as well as trace elements (e.g. salts of iron, manganese, boron, cupper, cobalt, molybdenum or zinc etc.).

The formulation may contain the compound (a) of the formula (I) and the herbicidal compound (b) and, optionally, the compound (c) in the range of concentration from 0.1 to 95 % by weight, preferably 0.5 to 90% by weight in total.

The composition of the invention may be used as it is or in the form of a drug formulation to control weeds, or alternatively the compounds of the composition can be tank-mixed at the point of use, and it may contain other known active compounds, particularly active compounds to be generally used, particularly used for paddy field, such as bactericides, insecticides, plant regulators, plant nutritional agents, soil conditioners and the like. Additionally, the use the compositions together with external adjuvants is also possible and may improve the performance of the compositions. The external adjuvants can be added to the tank-mix or applied separately to the plants or the area where they are growing.

The composition of the invention may be used as it is or in the form of a drug formulation, or alternatively in the application form prepared by further dilution of said drug formulation, such as ready-to-use solution, emulsion, suspension, powder, wettable powder or granule. The formulations in these forms may be applied to the weed plants or the area were they are growing, preferably to the paddy field, according to general methods such as watering, spraying or atomizing, dusting, granule application and the like.

The composition of the invention may be applied to the weed plants or the area where they are growing before, during or after emergence of the weed plants or the crop plants. The compositions preferably may be applied to the paddy rice field before, during or after rice planting. The amount of the composition to be applied may vary within the substantial range. The application amount may be, for example, within the range of 0.01 to 5 kg/ha, preferably 0.06 to 4.5 kg/ha, in total of the compound (a) of the formula (I), the herbicidal compound (b) and, optionally, the compound (c).

The beneficial effects of the compound of the invention are more specifically illustrated by means of the following examples. However the present invention should not be limited only to these examples.

### Examples

### Biological tests and examples of formulations

### [Active compounds]

Ingredient (a)
   (a-1): compound No.1 (see Table A above.)
   (a-2): compound No.2 (same as above)
   (a-3): compound No.7 (same as above)
   (a-4): compound No. 14 (same as above)
Ingredient (b): above described (b-1) to (b-8)

### [Preparation of test drugs]

Carrier 5 parts by weight of acetone

Surfactant: one part by weight of benzyloxy polyglycol ether.

Above described carrier and surfactant are mixed with one part by weight of the active compound ((a) ingredient and (b) ingredient) and the resulting preparation is then diluted with water to obtain given amount of the test drug (the formulation).

### Test example 1: Test of weed control by treatment for flooded paddy field (treatment at 1 leaf-stage)

### [Test method]

In a greenhouse, seeds or tubers of *Echinochloa, Scirpus juncoides Roxburgh, Monochoria vaginalis Presl,* annual broad-leaved weeds (*Lindemia procumbens Philcox, Lindemia dubia L. Penn., Rotala indica Koehne, Elatine triandra Schk, Ammannia multiflora Roxb*.), *Cyperus serotinus Rottboel* and *Sagittaria pygmaea Miq.* were inoculated in a 500cm² pot filled with paddy field soil. After 2 leaf-stage of rice were transplanted, water was poured to a depth of about 3 cm. At 1.0 leaf-stage of *Echinochloa oryzicola Vasing,* a prescribed, diluted solution of the formulation of each active compound and each herbicidal compound in the table was separately or simultaneously applied to the surface of water. After the treatment, the water depth of 3cm was maintained, and herbicidal effect was examined after 4 weeks. In the assessment of the herbicidal effect and the phytotoxicity, 100% refers to complete death and 0% refers to no effect or no phytotoxicity.

### [Results]

The results are shown in Table 1. In this table, ECHSS refers to *Echinochloa,* SCPSS refers to *Scirpus juncoides Roxburgh,* MOOVP refers to *Monochoria vaginalis Presl,* BBBBB refers to annual broad-leaved weeds, CYPSE refers to *Cyperus serotinus Rottboel,* SAGPY refers to *Sagittaria pygmaea Miq.* and ORYSP refers to transplanted rice, respectively (in the table abbreviations of the plant species to be read vertically).

**Table 1: Test of weed control by treatment for flooded paddy field_(treatment at 1 leaf-stage)**

| Active ingredients | Amount of effective ingredients (g ai/ha) | Herbicidal effect (%) | | | | | | Phyto-toxicity (%) |
|---|---|---|---|---|---|---|---|---|
| | | E | S | M | B | C | S | O |
| | | C | C | O | B | Y | A | R |
| | | H | P | O | B | P | G | Y |
| | | S | S | V | B | S | P | S |
| | | S | S | P | B | E | Y | P |
| (a-1) | 50 | 95 | 87 | 47 | 45 | 93 | 90 | 0 |
| | 30 | 93 | 85 | 25 | 25 | 90 | 70 | 0 |
| (a-1)+(b-7) | 50+200 | 100 | 100 | 100 | 100 | 100 | 100 | 0 |
| (a-1)+(b-7) | 30+200 | 100 | 100 | 100 | 100 | 100 | 100 | 0 |
| (b-7) | 200 | 95 | 95 | 90 | 90 | 90 | 90 | 0 |
| (a-1)+(b-8) | 50+50 | 100 | 100 | 100 | 100 | 100 | 98 | 15 |
| (a-1)+(b-8) | 30+50 | 100 | 100 | 100 | 100 | 100 | 98 | 15 |
| (b-8) | 50 | 95 | 95 | 95 | 95 | 95 | 90 | 15 |
| (a-1)+(b-1) | 50+350 | 100 | 100 | 100 | 100 | 95 | 95 | 10 |
| (a-1)+(b-1) | 30+350 | 100 | 100 | 100 | 100 | 95 | 95 | 10 |
| (b-1) | 350 | 20 | 90 | 100 | 100 | 50 | 90 | 10 |
| (a-1)+(b-6) | 50+300 | 100 | 100 | 100 | 100 | 100 | 95 | 0 |
| (a-1)+(b-6) | 30+300 | 100 | 100 | 100 | 95 | 100 | 95 | 0 |
| (b-6) | 300 | 95 | 95 | 95 | 85 | 95 | 50 | 0 |
| (a-1)+(b-5) | 50+20 | 100 | 100 | 100 | 100 | 100 | 100 | 10 |
| (a-1)+(b-5) | 30+20 | 100 | 100 | 100 | 100 | 100 | 100 | 10 |
| (b-5) | 20 | 30 | 95 | 95 | 95 | 60 | 90 | 10 |
| (a-1)+(b-4) | 50+50 | 100 | 100 | 100 | 95 | 95 | 95 | 0 |
| (a-1)+(b-4) | 30+50 | 100 | 95 | 95 | 95 | 95 | 95 | 0 |
| (b-4) | 50 | 50 | 90 | 90 | 90 | 85 | 90 | 0 |
| (a-1)+(b-3) | 50+800 | 100 | 100 | 100 | 100 | 100 | 100 | 0 |
| (a-1)+(b-3) | 30+800 | 100 | 100 | 100 | 100 | 100 | 100 | 0 |
| (b-3) | 800 | 80 | 70 | 80 | 100 | 20 | 70 | 0 |
| (a-1)+(b-2) | 50+750 | 100 | 100 | 100 | 85 | 100 | 95 | 0 |
| (a-1)+(b-2) | 30+750 | 100 | 100 | 100 | 85 | 100 | 95 | 0 |
| (b-2) | 750 | 100 | 90 | 80 | 50 | 70 | 70 | 0 |
| (a-3) | 50 | 90 | 60 | 40 | 35 | 90 | 90 | 0 |
| | 30 | 90 | 60 | 20 | 20 | 90 | 70 | 0 |
| (a-3)+(b-7) | 50+200 | 100 | 100 | 100 | 100 | 100 | 100 | 0 |
| (a-3)+(b-7) | 30+200 | 100 | 100 | 100 | 100 | 100 | 100 | 0 |
| (b-7) | 200 | 95 | 95 | 90 | 90 | 90 | 90 | 0 |
| (a-3)+(b-1) | 50+350 | 100 | 100 | 100 | 100 | 95 | 95 | 0 |
| (a-3)+(b-1) | 30+350 | 95 | 100 | 100 | 100 | 95 | 95 | 0 |
| (b-1) | 350 | 20 | 90 | 100 | 100 | 50 | 90 | 0 |

| | | | | | | | | |
|---|---|---|---|---|---|---|---|---|
| ai: active ingredient | | | | | | | | |

### Test example 2: Test of weed control by treatment for flooded paddy field (treatment at 3 leaf-stage)

### [Test method]

In a greenhouse, seeds or tubers of *Echinochloa, Cyperus difformis L., Scirpus juncoides Roxburgh, Monochoria vaginalis Presl,* annual broad-leaved weeds (*Lindemia procumbens Philcox, Lindemia dubia L. Penn., Rotala indica Koehne, Elatine triandra Schk, Ammannia multiflora Roxb*.), *Cyperus serotinus Rotboel* and *Sagittaria pygmaea Miq.* were inoculated in a 500cm² pot filled with paddy field soil. After 2 leaf-stage of rice were transplanted, water was poured to a depth of about 3 cm. At 3.0 leaf-stage of *Echinochloa,* a prescribed, diluted solution of the formulation of each active compound and each herbicidal compound in the table was separately or simultaneously applied to the surface of water. After the treatment, the water depth of 3cm was maintained, and herbicidal effect was examined after 4 weeks. In the assessment of the herbicidal effect and the phytotoxicity, 100% refers to complete death and 0% refers to no effect or no phytotoxicity.

### [Results]

The results are shown in Table 2. In this table, ECHSS refers to *Echinochloa,* SCPSS refers to *Scirpus juncoides Roxburgh,* MOOVP refers to *Monochoria vaginalis Presl,* BBBBB refers to annual broad-leaved weeds, CYPSE refers to *Cyperus serotinus Rottboel,* SAGPY refers to *Sagittaria pygmaea Miq.* and ORYSP refers to transplanted rice, respectively (in the table abbreviations of the plant species to be read vertically).

**Table 2: Test of weed control by treatment for flooded paddy field (treatment at 3 leaf-stage)**

| Active ingredients | Amount of effective ingredients (g ai/ha) | Herbicidal effect (%) | | | | | | Phyto-toxicity (%) |
|---|---|---|---|---|---|---|---|---|
| | | E | S | M | B | C | S | O |
| | | C | C | O | B | Y | A | R |
| | | H | P | O | B | P | G | Y |
| | | S | S | V | B | S | P | S |
| | | S | S | P | B | E | Y | P |
| (a-1) | 50 | 90 | 83 | 45 | 30 | 90 | 73 | 0 |
| | 30 | 90 | 80 | 20 | 21 | 90 | 70 | 0 |
| (a-1)+(b-7) | 50+200 | 95 | 90 | 95 | 90 | 95 | 90 | 0 |
| (a-1)+(b-7) | 30+200 | 95 | 90 | 95 | 90 | 95 | 90 | 0 |
| (b-7) | 200 | 70 | 88 | 95 | 88 | 70 | 80 | 0 |
| (a-1)+(b-8) | 50+50 | 95 | 90 | 95 | 90 | 95 | 95 | 5 |
| (a-1)+(b-8) | 30+50 | 95 | 90 | 95 | 90 | 95 | 95 | 5 |
| (b-8) | 50 | 85 | 90 | 95 | 85 | 90 | 85 | 5 |
| (a-1)+(b-1) | 50+350 | 95 | 90 | 100 | 93 | 95 | 95 | 0 |
| (a-1)+(b-1) | 30+350 | 95 | 90 | 100 | 93 | 95 | 95 | 0 |
| (b-1) | 350 | 20 | 90 | 100 | 90 | 20 | 90 | 0 |
| (a-1)+(b-6) | 50+300 | 95 | 90 | 80 | 70 | 90 | 85 | 0 |
| (a-1)+(b-6) | 30+300 | 95 | 90 | 70 | 70 | 90 | 85 | 0 |
| (b-6) | 300 | 69 | 80 | 55 | 55 | 75 | 50 | 0 |
| (a-1)+(b-5) | 50+20 | 95 | 95 | 95 | 75 | 95 | 85 | 0 |
| (a-1)+(b-5) | 30+20 | 95 | 95 | 95 | 75 | 95 | 85 | 0 |
| (b-5) | 20 | 50 | 90 | 80 | 60 | 20 | 60 | 0 |
| (a-1)+(b4) | 50+50 | 95 | 90 | 95 | 90 | 95 | 90 | 0 |
| (a-1)+(b4) | 30+50 | 95 | 90 | 95 | 90 | 95 | 90 | 0 |
| (b-4) | 50 | 20 | 85 | 90 | 90 | 80 | 80 | 0 |
| (a-1)+(b-3) | 50+800 | 95 | 85 | 80 | 95 | 90 | 95 | 0 |
| (a-1)+(b-3) | 30+800 | 95 | 80 | 65 | 95 | 90 | 95 | 0 |
| (b-3) | 800 | 10 | 0 | 50 | 70 | 0 | 60 | 0 |
| (a-1)+(b-2) | 50+750 | 95 | 90 | 90 | 50 | 95 | 90 | 0 |
| (a-1)+(b-2) | 30+750 | 95 | 90 | 90 | 50 | 95 | 90 | 0 |
| (b-2) | 750 | 45 | 80 | 70 | 30 | 90 | 40 | 0 |
| (a-3) | 50 | 90 | 60 | 13 | 8 | 90 | 70 | 0 |
| | 30 | 90 | 60 | 10 | 3 | 90 | 70 | 0 |
| (a-3)+(b-7) | 50+200 | 95 | 90 | 95 | 90 | 90 | 95 | 0 |
| (a-3)+(b-7) | 30+200 | 95 | 90 | 95 | 90 | 90 | 95 | 0 |
| (b-7) | 200 | 70 | 88 | 95 | 80 | 70 | 80 | 0 |
| (a-3)+(b-1) | 50+350 | 95 | 95 | 100 | 90 | 90 | 95 | 0 |
| (a-3)+(b-1) | 30+350 | 95 | 95 | 100 | 90 | 90 | 95 | 0 |
| (b-1) | 350 | 20 | 90 | 100 | 90 | 20 | 90 | 0 |

| | | | | | | | | |
|---|---|---|---|---|---|---|---|---|
| ai: active ingredient | | | | | | | | |

### Test example 3: Test of weed control by spray treatment (treatment at 1.5 to 3.0 leaf-stage)

### [Test method]

In a greenhouse, seeds of rice (var.: Nipponbare and RD23) and weeds (*Echinochloa oryzicola Vasing, Echinochloa cruss-galli, Leptochloa chinensis, Cyperus difformis L., Cyperus iria L.,* annual broad-leaved weeds (*Monochoria vaginalis Presl, Lindemia procumbens Philcox, Lindemia dubia L. Penn., Rotala indica Koehne, Elatine triandra Schk, Ammannia multiflora Roxb.* and the like)) were sown in a 500cm² pot filled with paddy field soil and covered with soil. Water was added to the pot (a depth of 0 cm) to be a wet condition, and each test plant was grown in the greenhouse to 1.5 to 3.0 leaf-stage, after then a prescribed, diluted solution of the formulation of each active compound and each herbicidal compound in the table were separately or simultaneously sprayed over the pots with plants. At 3 days after the treatment, the water depth of 3 cm was maintained, and 4 weeks later, herbicidal effect was then examined. In the assessment of the herbicidal effect and the phytotoxicity, 100% refers to complete death and 0% refers to no effect or no phytotoxicity.

### [Results]

The results are shown in Table 3. In this table, ECHOR refers to *Echinochloa oryzicola Vasing,* ECHCG refers to *Echinochloa cruss-galli,* LEFCH refers to *Leptochloa chinensis,* CYPDI refers to *Cyperus difformis L.,* CYPIR refers to *Cyperus iria L.,* MOOVP refers to *Monochoria vaginalis Presl,* BBBBB refers to annual broad-leaved weeds, ORYSW^{*1} refers to submerged direct sown paddy (Nipponbare), ORYSW^{*2} refers to submerged direct sown paddy (RD-23), respectively;
(in the table abbreviations of the plant species to be read vertically).

**Table 3: Test of weed control by sprinkling treatment (treatment at 1.5 to 3.0 leaf-stage)**

| Active ingredients | Amount of effective ingredients (g ai/ha) | Herbicidal effect (%) | | | | | | | Phyto-toxicity (%) | |
|---|---|---|---|---|---|---|---|---|---|---|
| | | E | E | L | C | C | M | B | O | O |
| | | C | C | E | Y | Y | O | B | R | R |
| | | H | H | F | P | P | O | B | Y | Y |
| | | O | C | C | D | I | V | B | S | S |
| | | R | G | H | I | R | P | B | W^{*1} | W^{*2} |
| (a-1) | 50 | 100 | 100 | 90 | 100 | 100 | 85 | 70 | 10 | 10 |
| | 30 | 100 | 100 | 75 | 100 | 100 | 85 | 70 | 5 | 5 |
| (a-3) | 50 | 100 | 100 | 80 | 100 | 100 | 85 | 85 | 10 | 0 |
| | 30 | 100 | 100 | 65 | 100 | 100 | 65 | 65 | 0 | 0 |
| (a-2) | 50 | 100 | 100 | 65 | 100 | 100 | 65 | 85 | 10 | 10 |
| | 30 | 100 | 100 | 65 | 100 | 100 | 40 | 70 | 5 | 5 |
| (a-4) | 50 | 100 | 100 | 50 | 100 | 100 | 25 | 75 | 5 | 0 |
| | 30 | 100 | 100 | 50 | 100 | 100 | 25 | 65 | 0 | 0 |
| (b-5) | 20 | 15 | 10 | 15 | 100 | 100 | 95 | 90 | 10 | 10 |
| (a-1)+(b+5) | 50+20 | 100 | 100 | 95 | 100 | 100 | 95 | 95 | 10 | 10 |
| | 30+20 | 100 | 100 | 80 | 100 | 100 | 95 | 95 | 10 | 10 |
| (a-3)+(b+5) | 50+20 | 100 | 100 | 85 | 100 | 100 | 95 | 95 | 10 | 10 |
| | 30+20 | 100 | 100 | 75 | 100 | 100 | 95 | 90 | 10 | 10 |
| (a-2)+(b+5) | 50+20 | 100 | 100 | 90 | 100 | 100 | 95 | 95 | 10 | 10 |
| | 30+20 | 100 | 100 | 80 | 100 | 100 | 95 | 95 | 10 | 10 |
| (a-4)+(b+5) | 50+20 | 100 | 100 | 70 | 100 | 100 | 95 | 95 | 10 | 10 |
| | 30+20 | 100 | 100 | 70 | 100 | 100 | 95 | 90 | 10 | 10 |

| | | | | | | | | | | |
|---|---|---|---|---|---|---|---|---|---|---|
| ai: active ingredient | | | | | | | | | | |

### Formulation example 1

To the mixture of 0.5 parts by weight of the active compound (a-4), 3 parts by weight of the active compound (b-7), 33.5 parts by weight of bentonite (montmorillonite), 60 parts by weight of talc and 3 parts by weight of ligninsulfonate was added 25 parts by weight of water and the mixture is then well kneaded and made in granules of 10-40 mesh by an extrusion granulator, which are then dried at 40-50°C to obtain granules.

### Formulation example 2

96.5 parts by weight of clay mineral particles having particle size distribution of 0.2-2 mm are charged in a rotary mixer and the mixture is wetted uniformly by spraying 0.5 parts by weight of the active compound (a-4) and 3 parts by weight of the active compound (b-6) in a liquid diluent under rotation and then dried at 40-50°C to obtain granules.

### Formulation example 3

The mixture of 0.5 parts by weight of the active compound (a-4) and 3.5 parts by weight of the active compound (b-1), 10 parts by weight of ethylene glycol, 3 parts by weight of polyoxyalkylene tristyryl phenyl ether, 10 parts by weight of xanthan gum, 0.5 parts by weight of 14% silicone oil emulsion and 72.5 parts by weight of water was stirred well and then crushed with a crusher (DYNO-MILL, KDL type) to obtain an aqueous suspension.

### Formulation example 4

0.5 parts by weight of the active compound (a-4), 0.2 parts by weight of the active compound (b-5), 35 parts by weight of sodium ligninsulfonate, 19.3 parts by weight of bentonite and 45 parts by weight of calcined diatomaceous earth powder are well mixed, and after addition of water, the mixture is kneaded well, extruded with a screen of 0.3 mm and dried to obtain water-dispersible granules.

### Industrial availability

The mixed herbicidal composition of the invention, preferably for paddy field, exhibits suitable controlling effect against various lowland weeds as well as has good residual effectiveness as shown in above examples.

## Claims

1. A mixed herbicidal composition **characterized by** comprising, as active ingredients,
(a) a difluoromethane sulfonanilide represented by the formula: 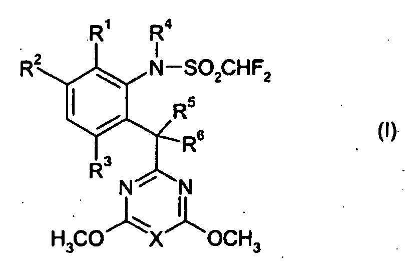 wherein
R¹ represents a fluorine atom or a chlorine atom, R² represents hydrogen, a fluorine atom or a chlorine atom, R³ represents hydrogen or a fluorine atom, R⁴ represents methyl, R⁵ represents hydrogen, R⁶ represents hydroxyl, a fluorine atom or a chlorine atom, or R⁵ and R⁶ may be taken together with the carbon atom to which they are attached to form C=O, and X represents CH or N;
and
(b) one or more herbicidal compounds selected from the group consisting of pretilachlor, butachlor, alachlor, metolachlor, acetochlor, clomeprop, bromobutide, benfuresate, indanofan, pyrazolate, benzofenap, pyrazoxyfen, pyradonil, oxaziclomefone, bensutfuron-methyl, azimsulfuron, imazosulfuron, pyrazosuifuron-ethyl, cyclosulfamuron, ethoxysulfuron, halosulfuron-methyl, orthosulfamuron, cinosulfuron, metosulfuron-methyl, flucetosulfuron, TH547 (Code No.), NC620 (Code No.), penoxsulam, thiobencarb, pyributicarb, molinate, dimethametryn, simetryn, cafenstrole, quinclorac, anilofos, mefenacet, fentrazamide, pentoxazone, oxadiargyl, oxadiazon, benzobicydon, mesotrione, tefuryltrione (Code No. AVH301), cyhalofop-butyl, metamifop, bispyribac-sodium salt, pyriftalid, pyrimisulfan, pyriminobac-methyl, chlomethoxynil, oxyfluorfen, dithiopyr, MCPA, MCPB, 2,4-D, daimuron, cumyluron, quinoclamine and clomazone.

2. The composition as claimed in claim 1, **characterized by** comprising additionally (c) one or more compounds selected from the group consisting of dymron (daimuron), isoxadifen(-ethyl), flurazole, fenchforazole-ethyl, fenclorim, doquintocet-mexyl, oxabetrinil, fluxofenim, mefenpyr-diethyl, furilazole, benoxacor, dichlormid and dicydonon as a safener.

3. The composition as daimed in claim 1, **characterized by** comprising at least one herbicidal compound (b) in the range of 0.01 to 200 parts by weight per one part by weight of the compound (a) of the formula (I).

4. The composition as daimed in claim 2, **characterized by** comprising one or more compounds (c) as a safener in the range of 0.05 to 200 parts by weight per one part by weight of the compound (a) of the formula (I).

5. The composition as daimed in claim 4, **characterized by** comprising at least one herbicidal compound (b) in the range of 0.01 to 200 parts by weight per one part by weight of the compound (a) of the formula (I).

6. The composition as daimed in any of claims 1 to 5, **characterized by** comprising at least one herbicidal compound (b) selected from the group consisting of clomeprop, bromobutide, benzofenap, bensulfuron methyl, ethoxysulfuron, fentrazamide, tefuryltrione (AVH301) and pyrimisulfan.

7. A method for controlling weeds which comprises applying the components (a) and (b) and optionally (c) as defined in any of claims 1 to 6 simultaneously or sequentially, to the plants, part of the weed plants or the area where they are growing.

8. The method as daimed in claim 7, **characterized by** selectively controlling weeds in crops of useful plants.

9. The method as daimed in claim 8, **characterized in that** the useful crop is a rice crop.

10. The method as daimed in claim 9, **characterized in that** the rice is paddy rice.

11. Use of the herbicidal composition as claimed in any of claims 1 to 6 for controlling weeds.

12. Use as daimed in claim 11 for selectively controlling weeds in rice crops.

## Patentansprüche

1. Gemischte herbizide Zusammensetzung, **dadurch gekennzeichnet, dass** sie als Wirkstoffe
(a) ein Difluormethansulfonanilid, dargestellt durch die Formel: 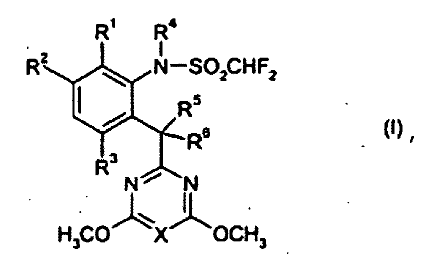 worin
R¹ ein Fluoratom oder ein Chloratom darstellt, R² Wasserstoff, ein Fluoratom oder ein Chloratom darstellt, R³ Wasserstoff oder ein Fluoratom darstellt, R⁴ Methyl darstellt, R⁵ Wasserstoff darstellt, R⁶ Hydroxyl, ein Fluoratom oder ein Chloratom darstellt, oder R⁵ und R⁶ mit dem Kohlenstoffatom, an welches sie gebunden sind, zusammengenommen werden können, um C=O auszubilden, und X CH oder N darstellt; und
(b) eine oder mehrere herbizide Verbindungen, ausgewählt von der Gruppe, bestehend aus Pretilachlor, Butachlor, Alachlor, Metolachlor, Acetochlor, Clomeprop, Bromobutid, Benfuresat, Indanofan, Pyrazolat, Benzofenap, Pyrazoxyfen, Pyraclonil, Oxaziclomefon, Bensulfuron-Methyl, Azimsulfuron, Imazosulfuron, Pyrazosulfuron-Ethyl, Cyclosulfamuron, Ethoxysulfuron, Halosulfuron-Methyl, Orthosulfamuron, Cinosulfuron, Metosulfuron-Methyl, Flucetosulfuron, TH547 (Code Nr.), NC620 (Code Nr.), Penoxsulam, Thiobencarb, Pyributicarb, Molinat, Dimethametryn, Simetryn, Cafenstrol, Quinclorac, Anilofos, Mefenacet, Fentrazamid, Pentoxazon, Oxadiargyl, Oxadiazon, Benzobicyclon, Mesotrion, Tefuryltrion (Code Nr. AVH301), Cyhalofop-Butyl, Metamifop, Bispyribac-Natriumsalz, Pyriftalid, Pyrimisulfan, Pyriminobac-Methyl, Chlomethoxynil, Oxyfluorfen, Dithiopyr, MCPA, MCPB, 2,4-D, Daimuron, Cumyluron, Quinoclamin und Clomazon,
umfasst.

2. Zusammensetzung nach Anspruch 1, **dadurch gekennzeichnet, dass** sie zusätzlich
(c) eine oder mehrere Verbindungen, ausgewählt von der Gruppe, bestehend aus Dymron (Daimuron), Isoxadifen(-Ethyl), Flurazol, Fenchlorazol-Ethyl, Fenclorim, Cloquintocet-Mexyl, Oxabetrinil, Fluxofenim, Mefenpyr-Diethyl, Furilazol, Benoxacor, Dichlormid und Dicyclonon als Safener umfasst.

3. Zusammensetzung nach Anspruch 1, **dadurch gekennzeichnet, dass** sie wenigstens eine herbizide Verbindung (b) im Bereich von 0,01 bis 200 Gewichtsteilen pro einem Gewichtsteil der Verbindung (a) der Formel (I) umfasst.

4. Zusammensetzung nach Anspruch 2, **dadurch gekennzeichnet, dass** sie eine oder mehrere Verbindungen (c) als Safener im Bereich von 0,05 bis 200 Gewichtsteilen pro einem Gewichtsteil der Verbindung (a) der Formel (I) umfasst.

5. Zusammensetzung nach Anspruch 4, **dadurch gekennzeichnet, dass** sie wenigstens eine herbizide Verbindung (b) im Bereich von 0,01 bis 200 Gewichtsteilen pro einem Gewichtsteil der Verbindung (a) der Formel (I) umfasst.

6. Zusammensetzung nach einem der Ansprüche 1 bis 5, **dadurch gekennzeichnet, dass** sie wenigstens eine herbizide Verbindung (b), ausgewählt von der Gruppe, bestehend aus Clomeprop, Bromobutid, Benzofenap, Bensulfuron-Methyl, Ethoxysulfuron, Fentrazamid, Tefuryltrion (AVH301) und Pyrimisulfan umfasst.

7. Verfahren zur Kontrolle von Unkräutern, welches das Aufbringen der Komponenten (a) und (b) und wahlweise (c), wie in einem der Ansprüche 1 bis 6 definiert, gleichzeitig oder nacheinander, auf die Pflanzen, einen Teil der Unkrautpflanzen oder auf die Fläche, auf welcher diese wachsen, umfasst.

8. Verfahren nach Anspruch 7, **dadurch gekennzeichnet, dass** selektiv Unkräuter in Nutzpflanzen bekämpft werden.

9. Verfahren nach Anspruch 8, **dadurch gekennzeichnet, dass** die Nutzpflanze eine Reispflanze ist.

10. Verfahren nach Anspruch 9, **dadurch gekennzeichnet, dass** der Reis Paddy-Reis ist.

11. Verwendung der herbiziden Zusammensetzung nach einem der Ansprüche 1 bis 6 zur Bekämpfung von Unkräutern.

12. Verwendung nach Anspruch 11 zur selektiven Bekämpfung von Unkräutern in Reisernten.

## Revendications

1. Composition herbicide mixte **caractérisée en ce qu'**elle comprend, comme ingrédients actifs,
(a) un difluorométhane sulfonanilide représenté par la formule : 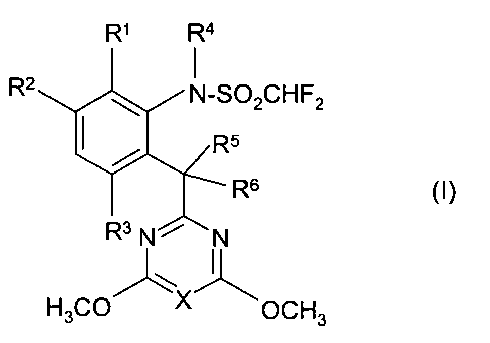 dans laquelle
R¹ représente un atome de fluor ou un atome de chlore, R² représente l'hydrogène, un atome de fluor ou un atome de chlore, R³ représente l'hydrogène ou un atome de fluor, R⁴ représente un groupe méthyle, R⁵ représente l'hydrogène, R⁶ représente un groupe hydroxyle, un atome de fluor ou un atome de chlore, ou R⁵ et R⁶ peuvent être pris ensemble avec l'atome de carbone auquel ils sont fixés pour former C=O et X représente CH ou N;
et
(b) un ou plusieurs composés herbicides choisis dans le groupe constitué de prétilachlor, butachlor, alachlor, métolachlor, acétochlor, cloméprop, bromobutide, benfurésate, indanofan, pyrazolate, benzofénap, pyrazoxyfène, pyraclonil, oxazicloméfone, bensulfuron-méthyle, azimsulfuron, imazosulfuron, pyrazosulfuron-éthyle, cyclosulfamuron, éthoxysulfuron, halosulfuron-méthyle, orthosulfamuron, cinosulfuron, métosulfuron-méthyle, flucétosulfuron, TH547 (Code n°), NC620 (Code n°), pénoxsulam, thiobencarbe, pyributicarbe, molinate, diméthamétryne, simétryne, cafenstrole, quinclorac, anilofos, méfénacet, fentrazamide, pentoxazone, oxadiargyl, oxadiazon, benzobicyclon, mésotrione, téfuryltrione (Code n° AVH301), cyhalofop-butyle, métamifop, bispyribac-sel de sodium, pyriftalide, pyrimisulfan, pyriminobac-méthyle, clométhoxynil, oxyfluorfène, dithiopyr, MCPA, MCPB, 2,4-D, daimuron, cumyluron, quinoclamine et clomazone.

2. Composition selon la revendication 1, **caractérisée en ce qu'**elle comprend en plus
(c) un ou plusieurs composés choisis dans le groupe constitué de dymron (daimuron), d'isoxadifen(éthyle), flurazole, fenchlorazole-éthyle, fenclorim, cloquintocet-mexyl, oxabétrinil, fluxofénim, méfenpyr-diéthyle, furilazole, benoxacor, dichlormide et dicyclonone en tant que safener.

3. Composition selon la revendication 1, **caractérisée en ce qu'**elle comprend au moins un composé herbicide (b) dans l'intervalle de 0,01 à 200 parties en poids pour une partie en poids du composé (a) de la formule (I).

4. Composition selon la revendication 2, **caractérisée en ce qu'**elle comprend un ou plusieurs composés (c) en tant que safener dans l'intervalle de 0,05 à 200 parties en poids pour une partie en poids du composé (a) de la formule (I).

5. Composition selon la revendication 4, **caractérisée en ce qu'**elle comprend au moins un composé herbicide (b) dans l'intervalle de 0,01 à 200 parties en poids pour une partie en poids du composé (a) de la formule (I).

6. Composition selon l'une quelconque des revendications 1 à 5, **caractérisée en ce qu'**elle comprend au moins un composé herbicide (b) choisi dans le groupe constitué de cloméprop, bromobutide, benzofénap, bensulfuron-méthyle, éthoxysulfuron, fentrazamide, téfuryltrione (AVH301) et pyrimisulfan.

7. Procédé pour contrôler les mauvaises herbes qui comprend l'application des constituants (a) et (b) et éventuellement (c) selon l'une quelconque des revendications 1 à 6 simultanément ou successivement sur les plantes, une partie des mauvaises herbes ou la zone où elles croissent.

8. Procédé selon la revendication 7, **caractérisé par** un contrôle sélectif des mauvaises herbes dans les récoltes de plantes utiles.

9. Procédé selon la revendication 8, **caractérisé en ce que** la récolte utile est une récolte de riz.

10. Procédé selon la revendication 9, **caractérisé en ce que** le riz est du riz de rizière.

11. Utilisation de la composition herbicide selon l'une quelconque des revendications 1 à 6 pour le contrôle de mauvaises herbes.

12. Utilisation selon la revendication 11 pour un contrôle sélectif de mauvaises herbes dans des récoltes de riz.
